# DEMANDE DE BREVET EUROPEEN

(11) **EP 0 936 568 A1**
(43) Date de publication de la demande: **18.08.1999**
(21) Numéro de dépôt: 99400326.7
(22) Date de dépôt: 11.02.1999
(51) Int. Cl.: G06F 17/60

(54) **Système de prise d'abonnement**

(30) Priorité: 11.02.1998 FR 9801612
(71) Demandeur: SAGEM SA, 75116 Paris (FR)
(72) Inventeur: Vermande, Michel, 95770 Montreuil sur Epte (FR)
(74) Mandataire: Bloch, Gérard

(57) **Abrégé**

Système pour prise d'abonnement auprès au moins d'un fournisseur (1-3) d'abonnements à de multiples produits comprenant au moins un terminal (4-6) de prise d'abonnement, avec des moyens d'interface homme-machine, et un frontal (7) de gestion des abonnements, par l'intermédiaire duquel le terminal(4-6) et le fournisseur (1-3) sont fonctionnellement reliés l'un à l'autre, frontal comportant des applications pour exécuter des opérations de gestion des abonnements, et le frontal (7) et le terminal (4-6) sont agencés pour coopérer de façon à ce que le frontal (7), sur requête du terminal (4-6), lance une application afin d'exécuter une opération de gestion pour le compte du terminal (4-6) et, le cas échéant, transmette au terminal (4-6) des informations résultantes.

## Description

Dans le domaine de la communication, il existe de plus en plus de fournisseurs, qu'il s'agisse d'opérateurs ou de sociétés de commercialisation de services, proposant au grand public divers abonnements à de multiples produits de communication tels que ceux transmis par câble, les bouquets satellite de télévision, le GSM, la téléphonie cellulaire, etc...

Certains points de distribution offrent un choix varié de tels produits et gèrent les abonnements. Une telle gestion s'avère très lourde.

Afin de simplifier la gestion des abonnements, une solution consiste à informatiser les points de distribution à l'aide d'ordinateurs dotés de logiciels d'aide à la gestion. Une telle solution n'est cependant pas satisfaisante car elle nécessite une infrastructure informatique coûteuse et exige une maintenance lourde du système matériel et logiciel.

L'invention tire donc son origine d'un problème de gestion d'abonnements à des produits de communication. La demanderesse entend toutefois ne pas limiter la portée de sa demande à cet exemple particulier mais l'étendre à la gestion d'abonnements à tout type de produit.

La présente invention propose de pallier les inconvénients précités.

A cet effet, l'invention concerne un système pour prise d'abonnement auprès au moins d'un fournisseur d'abonnements à de multiples produits comprenant au moins un terminal de prise d'abonnement, avec des moyens d'interface homme-machine, et un frontal de gestion des abonnements, par l'intermédiaire duquel le terminal et le fournisseur sont fonctionnellement reliés l'un à l'autre, frontal comportant des applications pour exécuter des opérations de gestion des abonnements, et le frontal et le terminal sont agencés pour coopérer de façon à ce que le frontal, sur requête du terminal, lance une application afin d'exécuter une opération de gestion pour le compte du terminal et, le cas échéant, transmette au terminal des informations résultantes.

Les logiciels d'application de gestion des abonnements résident donc dans le frontal de gestion, et non pas dans le terminal de prise d'abonnements qui peut néanmoins les utiliser à distance, par simple requête adressée au frontal, et recevoir, le cas échéant, les informations demandées.

Grâce à cela, on simplifie la maintenance et la mise à jour du système.

Avantageusement, le frontal appartient à un réseau Intranet utilisant les protocoles de communication de l'Internet.

La demanderesse a ainsi su tirer profit du réseau Intranet et des protocoles existants de communication sur l'Internet pour faire communiquer le terminal et le frontal.

Dans ce cas, et avantageusement encore, le terminal de prise d'abonnement peut être relié au réseau Intranet avec interposition d'un système de sécurité destiné à sécuriser ledit réseau.

L'invention concerne aussi un terminal de prise d'abonnement pour le système ci-dessus, comprenant des moyens pour communiquer avec un réseau informatique, un bloc de paiement électronique et des moyens d'impression.

L'invention sera mieux comprise à l'aide de la description suivante d'une forme de réalisation particulière du système de prise d'abonnement de l'invention et du terminal pour la mise en oeuvre du système, en référence au dessin annexé sur lequel:

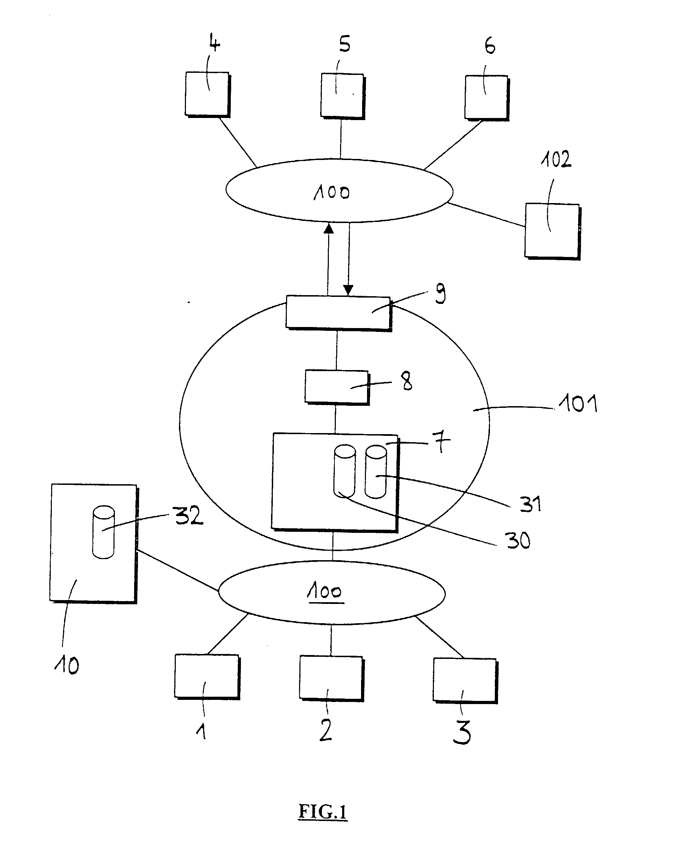

- la figure 1 représente un schéma bloc fonctionnel du système de l'invention et
- la figure 2 représente un schéma bloc fonctionnel du terminal de l'invention.

Le système de prise d'abonnement de l'invention permet de prendre des abonnements à de multiples produits auprès d'une pluralité de fournisseurs d'abonnements 1-3, depuis des points de distribution situés dans des magasins.

Dans l'exemple particulier de la description, les fournisseurs d'abonnements 1-3 sont des opérateurs et des sociétés de commercialisation de services proposant des abonnements à des produits de communication tels que la télévision par câble, la télévision par satellite, la téléphonie cellulaire, etc..

Le système de prise d'abonnement comprend une pluralité de terminaux 4-6 de prise d'abonnement, situés dans les points de distribution, un frontal 7 de gestion des abonnements, par l'intermédiaire duquel les terminaux 4-6 et les fournisseurs d'abonnements 1-3 sont fonctionnellement reliés les uns aux autres, et, ici, un serveur d'informations spécifiques 10.

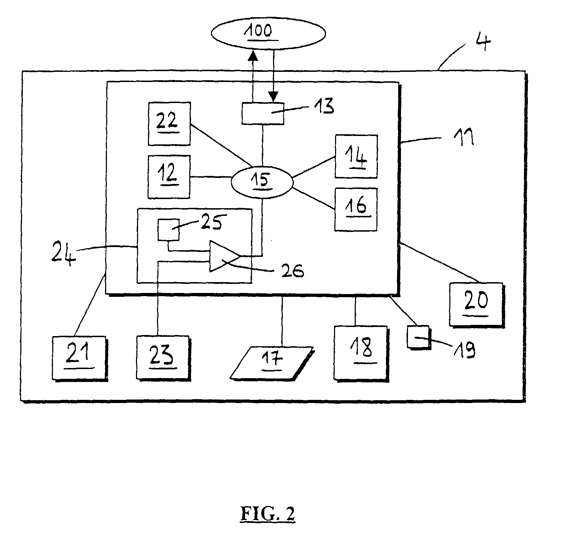

Les terminaux étant tous identiques, seul celui représenté sur la figure 2 va maintenant être décrit.

Le terminal 4 comprend une unité centrale d'ordinateur 11, en l'espèce une unité centrale de PC (personal computer - ordinateur personnel) standard, et plusieurs périphériques, connectés à l'unité centrale.

Comme périphériques d'interface homme-machine, le terminal 4 comporte un écran de visualisation 18, un clavier de saisie 17, une souris 19 et une imprimante 20.

Dans l'unité centrale 11, il est prévu un microprocesseur 15, un bloc 14 de pilotage des périphériques du terminal 4, un modem 13 de liaison au réseau RTC 100, un bloc 16 d'interface homme-machine et un navigateur 12.

Le bloc 14 comprend des logiciels de pilotage des périphériques du terminal 4 et le bloc 16 un logiciel d'interface homme-machine destiné à faciliter l'utilisation du terminal, et notamment la communication avec le frontal 7, par affichage de menus contextuels à l'écran 18.

Le navigateur 12 comporte un logiciel standard de navigation sur l'Internet, en l'espèce le logiciel "Internet Explorer" de la société Microsoft. Le navigateur 12 permet d'utiliser des protocoles de communication standard sur L'Internet et d'exploiter des fichiers de données au format HTML (Hypertext Markup Language - Langage de marquage hypertexte) correspondant à des pages HTML. Le navigateur 12 est destiné à permettre au terminal 4 de communiquer avec un réseau Intranet 101, explicité plus loin, et plus particulièrement avec le frontal 7, en utilisant les protocoles de communication sur l'Internet.

On soulignera ici que le terminal 4 ne comprend pas de logiciels d'applications pour gérer les abonnements.

Le terminal 4 comprend enfin, dans l'unité centrale 11, un bloc 24 d'identification de l'opérateur du terminal et un bloc 22 d'interrogation d'un système bancaire 102 et, en périphérie, un bloc de paiement électronique 21 et un lecteur 23 de carte d'identification d'opérateur. Le bloc 22 est agencé pour interroger le système bancaire 102, par communication téléphonique à travers le RTC 100, afin d'obtenir une autorisation de paiement. Le bloc d'identification 24 comprend une mémoire 25 de stockage d'une base de données contenant les données d'identification d'une pluralité d'opérateurs autorisés à utiliser le terminal 4, et un comparateur 26. Celui-ci est relié, en entrée, au lecteur 23 et à la mémoire 25 et, en sortie, au microprocesseur 15, et destiné à comparer des données d'identification lues par le lecteur 23 à celles de la base 25 afin de n'autoriser l'utilisation du terminal 4 qu'aux opérateurs identifiés dans la base 25.

Tous les éléments du terminal 4 sont reliés au microprocesseur 15, destiné à contrôler leur fonctionnement.

Le frontal 7 de gestion des abonnements est un serveur analogue à un serveur de l'Internet, ici un ordinateur de type PC Pentium, comportant des applications pour exécuter des opérations de gestion des abonnements, une base 30 d'informations relatives aux produits et aux abonnements proposés par les différents fournisseurs d'abonnements 1-3 et une base 31 d'informations relatives aux abonnements pris et aux abonnés. Le terme "application" désigne pour l'homme du métier un logiciel d'application.

Les informations de la base 30 sont stockées sous forme de fichiers de données au format HTML correspondant à des pages HTML.

Les opérations de gestion du frontal 7 consistent notamment à:
- consulter des pages HTML de la base 30,
- prendre, enregistrer, un abonnement à un produit et les coordonnées d'un abonné,
- éditer un contrat d'abonnement et
- transmettre les informations relatives aux abonnements pris aux fournisseurs d'abonnements concernés.

En outre, le frontal 7 comprend une application pour gérer la base 30 consistant notamment à mettre à jour les informations contenues dans la base 30, en fonction d'informations fournies par les fournisseurs 1-3.

Le frontal 7 appartient à un réseau Intranet 101. Il s'agit d'un réseau interne, local, utilisant les protocoles standards de communication sur l'Internet.

Le réseau Intranet 101 comprend un système de sécurité 9 destiné à protéger le réseau Intranet 101 des terminaux de prise d'abonnements, un routeur 8 destiné à aiguiller les données transitant entre les terminaux 4-6 et le frontal 7. Le système de sécurité 9 est relié au réseau RTC 100 et, par l'intermédiaire du routeur 8, au frontal 7. On soulignera que les terminaux 4-6, reliés au réseau RTC 100, sont ainsi reliés au frontal 7 avec interposition du système de sécurité 9.

Le serveur 10 est géré par les fournisseurs d'abonnements 1 - 3 et comprend une mémoire 32 de stockage d'une base d'informations spécifiques. Ces informations spécifiques concernent les produits et abonnements spécifiques des fournisseurs 1-3 et sont stockées sous forme de pages HTML. Le serveur 10 comprend une application de consultation des informations de sa base 32.

Après la description structurelle et fonctionnelle du système de prise d'abonnement, la prise d'abonnement à un produit pour un client, effectuée par un opérateur depuis le terminal 4, va maintenant être décrite.

Afin d'utiliser le terminal 4, l'opérateur, ici un vendeur du magasin, introduit sa carte d'identification dans le lecteur 23. Les données d'identification de l'opérateur, mémorisées dans une puce électronique supportées par la carte, sont lues par le lecteur 23 puis, dans le bloc d'identification 24, le comparateur 26 compare les données lues aux données d'identification de la base 25 et, les données d'identification lues étant contenues dans la base 25, adresse au microprocesseur 15 une autorisation d'utilisation du terminal 4.

A l'aide de l'interface homme-machine 16-19, l'opérateur commande au navigateur Internet 12 de connecter le terminal 4 au réseau Intranet 101, par un protocole de connexion téléphonique, afin d'établir une communication avec le frontal de gestion 7.

Après établissement de la communication, sur commande de l'opérateur et à l'aide de l'interface homme-machine 16-19, le terminal 4 adresse au frontal 7 une requête pour consulter les informations relatives à des produits et abonnements proposés par l'ensemble des fournisseurs d'abonnements. Sur commande de la requête, le frontal 7 lance l'application de consultation de la base 30 afin de consulter les informations demandées dans la base 30 pour le compte du terminal 4 et transmet à celui-ci les pages HTML contenant les informations demandées, sous forme de fichiers de données au format HTML. En réception, dans le terminal 4, le navigateur 12 interprète les fichiers transmis au format HTML et affiche sur l'écran 18 les pages HTML correspondantes. Le frontal 7 et le terminal 4 coopère ainsi de façon à ce que le frontal 7, sur requête du terminal 4, lance l'application de consultation de la base 30, pour le compte du terminal 4, et transmette à celui-ci les informations demandées, résultant de la consultation.

Pour obtenir des informations spécifiques concernant un produit ou un abonnement proposés par un fournisseur particulier, le terminal 4 adresse une requête au frontal 7, sur commande de l'opérateur et à l'aide de l'interface homme-machine 16-19. Le frontal 7 transmet la requête au serveur 10. Celui-ci, à l'aide de son application de consultation, consulte les informations demandées dans sa base 32 et les transmet au frontal 7 qui les retransmet au terminal 4. Le serveur 10, le frontal 7 et le terminal 4 coopèrent ainsi de façon à ce que, sur requête du terminal 4 adressée au frontal 7, le serveur 10 transmette au terminal 4, par l'intermédiaire du frontal 7, des informations spécifiques de la base 32.

Afin de prendre un abonnement à un produit, le terminal 4 adresse au frontal 7 une requête pour prendre un abonnement, sur commande de l'opérateur. Sur commande de la requête, le frontal 7 lance l'application de prise d'abonnement et transmet au terminal 4 une page HTML correspondant à un formulaire de saisie des caractéristiques de l'abonnement, du produit et des coordonnées de l'abonné. En réception, le navigateur 12 affiche le formulaire sur l'écran 18 et l'opérateur le remplit à l'aide de l'interface homme-machine 16-19, suivant le choix du client. Puis le terminal 4 renvoie le formulaire rempli au frontal 7 en adressant à celui-ci une requête pour éditer le contrat d'abonnement.

En outre, le bloc de paiement électronique 21 lit le contenu d'une carte bancaire du client et le bloc 22 interroge le système bancaire 102 afin d'obtenir une autorisation de paiement. L'autorisation de paiement ayant été accordée, le terminal 4 envoie au frontal 7 un avis d'autorisation de paiement.

Sur réception de la requête d'édition du contrat, du formulaire et de l'avis d'autorisation de paiement, le frontal 7 lance l'application d'édition du contrat d'abonnement et l'application d'enregistrement de l'abonnement pris. Le frontal 7 édite le contrat d'abonnement pour le compte du terminal, le lui transmet sous forme d'un fichier de données, et enregistre les caractéristiques de l'abonnement du produit et les coordonnées du client abonné dans la base de données 31.

A la réception du contrat d'abonnement par le terminal 4, l'imprimante 20 imprime le contrat.

En outre, le frontal 7 transmet ultérieurement, ici par liaison téléphonique, les caractéristiques du produit, de l'abonnement pris, et les coordonnées du client abonné au fournisseur auprès duquel l'abonnement a été pris.

Au cours de la communication entre le frontal 7 et le terminal 4, le système de sécurité 9 examine toutes les données transitant entre les terminaux et le réseau Intranet 101 afin de sécuriser le réseau 101, et le routeur 8 aiguille les données.

On soulignera que les applications de gestion des abonnements, qui se trouvent dans le frontal 7, sont utilisables à distance par les terminaux de prise d'abonnement4-6.

Dans une autre forme de réalisation, plus perfectionnée, du système, le frontal comprend des applications, utilisables par les terminaux de prise d'abonnement, pour consulter des abonnements pris, par consultation de la base d'informations correspondantes, et pour modifier des abonnements pris.

Il pourrait enfin être prévu de relier le serveur d'informations spécifiques à l'Internet.

Dans la description qui vient d'être faite, les terminaux 4 - 6 ont chacun leurs propres périphériques. On pourrait également envisager que plusieurs terminaux, d'un même point de distribution, partagent des périphériques communs.

Enfin, à la place du réseau RTC, les terminaux 4 - 6 pourraient se connecter au frontal 7 via un réseau local de communication de type LAN (Local Area Network - réseau local) ou via un réseau de communication de type WAN (Wide Area Network - réseau à large étendue).

## Revendications

1. Système pour prise d'abonnement auprès au moins d'un fournisseur (1-3) d'abonnements à de multiples produits comprenant au moins un terminal (4-6) de prise d'abonnement, avec des moyens d'interface homme-machine (16-20), et un frontal (7) de gestion des abonnements, par l'intermédiaire duquel le terminal(4-6) et le fournisseur (1-3) sont fonctionnellement reliés l'un à l'autre, frontal comportant des applications pour exécuter des opérations de gestion des abonnements, et le frontal (7) et le terminal (4-6) sont agencés pour coopérer de façon à ce que le frontal (7), sur requête du terminal (4-6), lance une application afin d'exécuter une opération de gestion pour le compte du terminal (4-6) et, le cas échéant, transmette au terminal (4-6) des informations résultantes.

2. Système selon la revendication 1, dans lequel le frontal (7) appartient à un réseau Intranet (101) utilisant les protocoles de communication de l'Internet.

3. Système selon la revendication 2, dans lequel le terminal (4-6) de prise d'abonnement est relié au réseau Intranet (101) avec interposition d'un système de sécurité (9) destiné à sécuriser ledit réseau (101).

4. Système selon l'une des revendications 2 et 3, dans lequel le terminal (4-6) est relié au réseau Intranet (101) par un réseau téléphonique (100).

5. Système selon l'une des revendications 1 à 4, dans lequel le frontal de gestion (7) comprend des moyens (30) de stockage d'une base d'informations relatives aux produits et abonnements proposés par le fournisseur, et des moyens pour gérer ladite base.

6. Système selon l'une des revendications 1 à 5, dans lequel il est prévu un serveur (10) géré par le fournisseur d'abonnements (1-3) et comportant des moyens (32) de stockage d'une base d'informations spécifiques du fournisseur (1-3), et le serveur (10), le frontal (7) et le terminal (4-6) sont agencés pour coopérer de façon à ce que, sur requête du terminal (4-6) adressée au frontal (7), le serveur (10) transmette au terminal (4-6), par l'intermédiaire du frontal (7), des informations spécifiques de ladite base (32).

7. Terminal de prise d'abonnement pour le système de la revendication 1, comprenant des moyens (12, 13) pour communiquer avec un réseau informatique (101), un bloc de paiement électronique (21) et des moyens d'impression (20).

8. Terminal selon la revendication 7, comprenant des moyens (23 - 26) d'identification d'un opérateur du terminal (4).

9. Terminal selon l'une des revendications 7 et 8, comprenant des moyens (12) pour exploiter des fichiers de données au format HTML (Hyper Text Markup Language - langage de marquage hypertexte).

10. Terminal selon l'une des revendications 7 à 9, dans lequel il est prévu un logiciel (12) standard de navigation sur l'Internet afin de communiquer avec le frontal (7).

11. Terminal selon l'une des revendications 7 à 10 comprenant des moyens (22) d'interrogation d'un système bancaire (102).
